# EUROPEAN PATENT APPLICATION

(11) **EP 4 002 324 A1**
(43) Date of publication of application: **25.05.2022**
(21) Application number: 21205413.4
(22) Date of filing: 28.10.2021
(51) Int. Cl.: G08G 1/16, G08G 1/0968

(54) **VEHICLE TRAJECTORY PLANNING METHOD AND APPARATUS**

(30) Priority: 21.12.2020 CN 202011517495
(71) Applicant: BEIJING BAIDU NETCOM SCIENCE TECHNOLOGY CO., LTD., No.10 Shangdi 10th Street Haidian District Beijing 100085 (CN)
(72) Inventor: LIU, Yiming, BEIJING (CN)
(74) Representative: Bittner, Bernhard

(57) **Abstract**

A vehicle trajectory planning method and an apparatus are provided, which are related to the field of automatic driving and intelligent road network. The method includes: receiving initially planned trajectories of respective autonomous vehicles; and adjusting, in a case that a conflict exists between the initially planned trajectories of the respective autonomous vehicles, a planned trajectory of an autonomous vehicle associated with the conflict. The present disclosure can improve the utilization efficiency of the road network and reduce the collision risk.

## Description

### TECHNICAL FIELD

The present disclosure relates to the field of intelligent transportation, in particular to the field of automatic driving and intelligent road network.

### BACKGROUND

An autonomous vehicle generally performs routing and trajectory planning at a vehicle end, and this mode belongs to individual vehicle intelligence. Game issue will occurs when contending a right-of-way under the individual vehicle intelligence mode, that is, the specific vehicle to which the right-of-way belongs to at a moment is uncertain, which is determined by the game between the vehicles. This leads to the low utilization efficiency of a road network, and there is a collision risk along with the gaming issue.

### SUMMARY

The present disclosure provides a vehicle trajectory planning method, an apparatus, an electronic device, and a storage medium.

According to the first aspect of the present disclosure, there is provided a vehicle trajectory planning method including:
receiving initially planned trajectories of respective autonomous vehicles; and
adjusting, in a case that a conflict exists between the initially planned trajectories of the respective autonomous vehicles, a planned trajectory of an autonomous vehicle associated with the conflict.

According to another aspect of the present disclosure, there is provided a vehicle trajectory planning method including:
sending an initially planned trajectory of an autonomous vehicle to a server; and
receiving adjustment information for the initially planned trajectory from the server; wherein the adjustment information is determined by the server according to initially planned trajectories of respective autonomous vehicles.

According to another aspect of the present disclosure, there is provided a vehicle trajectory planning apparatus including:
a first receiving module configured for receiving initially planned trajectories of respective autonomous vehicles; and
an adjusting module configured for adjusting, in a case that a conflict exists between the initially planned trajectories of the respective autonomous vehicles, a planned trajectory of an autonomous vehicle associated with the conflict.
According to another aspect of the present disclosure, there is provided a vehicle trajectory planning apparatus including:
a sending module configured for sending an initially planned trajectory of an autonomous vehicle to a server; and
a second receiving module configured for receiving adjustment information for the initially planned trajectory from the server; wherein the adjustment information is determined by the server according to initially planned trajectories of respective autonomous vehicles.

According to another aspect of the present disclosure, an electronic device is provided, including:
at least one processor; and
a memory communicatively connected to the at least one processor; wherein,
the memory stores instructions executable by the at least one processor, and the instructions are executed by the at least one processor to enable the at least one processor to perform the vehicle trajectory planning method provided by any embodiment according to the first aspect of the present disclosure.

According to another aspect of the present disclosure, an electronic device is provided, including:
at least one processor; and
a memory communicatively connected to the at least one processor; wherein,
the memory stores instructions executable by the at least one processor, and the instructions are executed by the at least one processor to enable the at least one processor to perform the vehicle trajectory planning method provided by any embodiment according to the second aspect of the present disclosure.

According to another aspect of the present disclosure, there is provided a non-transitory computer-readable storage medium storing computer instructions, wherein the computer instructions are executed by a computer to enable the computer to perform the vehicle trajectory planning method provided by any embodiment of the present disclosure.

According to another aspect of the present disclosure, a computer program product is provided that includes a computer program that, when executed by a processor, implements the method in any of the embodiments of the present disclosure.

According to another aspect of the present disclosure, there is provided a service device for an intelligent road network including the electronic device provided in any embodiment according to the fifth aspect of the present disclosure.

According to another aspect of the present disclosure, an autonomous vehicle is provided including the electronic device provided in any embodiment according to the sixth aspect of the present disclosure.

According to the present disclosure, the initially planned trajectories of respective autonomous vehicles are compared, and a planned trajectory of an autonomous vehicle associated with a conflict is adjusted in a case that the conflict exists between the initially planned trajectories, so that the centralized processing of the trajectories of the autonomous vehicles in a road is realized, the utilization efficiency of a road network is improved, and the collision risk is reduced.

It is to be understood that the content described in this section is not intended to identify the key or important features of the embodiments of the present disclosure, nor is it intended to limit the scope of the present disclosure. Other features of the present disclosure will be easily understood through the following description.

### BRIEF DESCRIPTION OF THE DRAWINGS

The accompanying drawings are included to provide a better understanding of the present solution and are not to be construed as limiting the present disclosure, in which:
Fig. 1 is a flowchart illustrating a vehicle trajectory planning method according to an embodiment of the present disclosure;
Fig. 2 is a flowchart of an of a vehicle trajectory planning method according to an embodiment of the present disclosure;
Fig. 3 is a schematic diagram of a vehicle planned trajectory according to an embodiment of the present disclosure;
Fig. 4 is a schematic diagram showing an information source of a road network system for a vehicle trajectory planning method according to an embodiment of the present disclosure;
Fig. 5 is a flowchart illustrating another vehicle trajectory planning method according to an embodiment of the present disclosure;
Fig. 6 is a schematic structural diagram of a vehicle trajectory planning apparatus 600 according to an embodiment of the present disclosure;
Fig. 7 is a schematic structural diagram of a vehicle trajectory planning apparatus 700 according to an embodiment of the present disclosure;
Fig. 8 is a block diagram of an electronic device for implementing a vehicle trajectory planning method according to an embodiment of the present disclosure.

### DETAILED DESCRIPTION

The following describes an exemplary embodiment of the present disclosure with reference to the accompanying drawings which includes various details of the embodiment of the present disclosure to facilitate understanding and should be considered as merely exemplary. Accordingly, one of ordinary skills in the art appreciates that various changes and modifications can be made to the embodiments described herein without departing from the scope and spirit of the present disclosure. Also, descriptions of well-known functions and structures are omitted from the following description for clarity and conciseness.

An autonomous vehicle generally performs routing and trajectory planning at a vehicle end. For example, a routing module is adopted to determine a driving path of lane level according to a starting point and an ending point of an autonomous vehicle; a planning module is adopted to determine an accurately planned trajectory. The planned trajectory may include expected locations of a current vehicle at respective time points within a period of time in future. For example, a time point is taken every 100ms in the next 10s, and the planned trajectory includes coordinate points at which the current vehicle should be located at these time points.

The individual vehicle intelligent mode is easy to cause a situation that different autonomous vehicles compete for the right-of-way, and the right-of-way needs to be determined through the game between vehicles, so that the utilization efficiency of the road network is not high, and the safety risk exists.

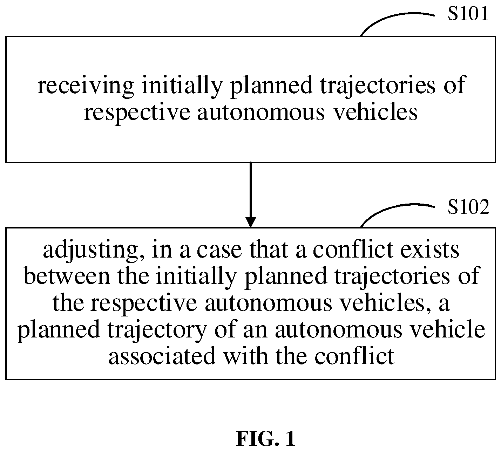

An embodiment of the present disclosure provides a vehicle trajectory planning method, which can be applied to a server device arranged in an intelligent road network. Fig. 1 is a flowchart illustrating a vehicle trajectory planning method according to an embodiment of the present disclosure, including:
step S101: receiving initially planned trajectories of respective autonomous vehicles; and
step S102: adjusting, in a case that a conflict exists between the initially planned trajectories of the respective autonomous vehicles, a planned trajectory of an autonomous vehicle associated with the conflict.

In some implementations, the initially planned trajectory includes planned positions of the autonomous vehicle at a plurality of time points within a preset time period.

Accordingly, the case where a conflict exists between the initially planned trajectories of the autonomous vehicles in the above step S102 may include: there is a time point at which the planned positions conflict in the plurality of time points within the preset time period.

The position of the autonomous vehicle may be expressed as a coordinate point of the center of the autonomous vehicle in a road network planar coordinate system that is established by taking the north-south direction as an X axis, taking the east-west direction as a Y axis, and taking the initial position of the current vehicle as the origin.

The planned positions conflict at a certain time point may mean that there is an overlap between coordinate points of a plurality of autonomous vehicles at the time point or that the distance between coordinate points is less than a preset threshold. Obviously, when a conflict exists between the initially planned trajectories of a plurality of autonomous vehicles, the competition for right-of-way occurs between the autonomous vehicles. According to the embodiment of the present disclosure, a server device in the intelligent road network can determine the distribution of the right-of-way according to the current road utilization efficiency and the safety strategy so as to ensure that only one vehicle exists in each road area at each moment, so that a distributed problem can be converted into a centralized problem, and the distribution problem of right-of-way can be thoroughly solved. The automatic driving is safer, and the utilization efficiency of the road network is higher. The specific solution is described as follows.

Optionally, adjusting the planned trajectory of the autonomous vehicle associated with the conflict in step S102 includes:
determining a modified planned trajectory for the autonomous vehicle associated with the conflict, and sending the modified planned trajectory to the autonomous vehicle associated with the conflict; and/or,
sending an instruction for re-determining a planned trajectory to the autonomous vehicle associated with the conflict.

In particular, determining the modified planned trajectory for the autonomous vehicle associated with the conflict may include: determining the modified planned trajectory for the autonomous vehicle associated with the conflict according to at least one of the initially planned trajectories of the respective autonomous vehicles, positioning information of the respective autonomous vehicles, category information of the respective autonomous vehicles, and road information.

After the server sends a modified planned trajectory for an autonomous vehicle, the autonomous vehicle can determine to adopt the modified planned trajectory and feed back confirmation information to the server. The server again confirms whether the modified planned trajectory is valid. If valid, no other vehicles will be allowed to occupy the locations at the expected time points for the modified planned trajectory. Alternatively, after the server sends a modified planned trajectory for an autonomous vehicle, the autonomous vehicle can re-determine a new planned trajectory by itself instead of adopting the modified planned trajectory, and send the new planned trajectory to the server. In this way, the server will re-perform the above step S101 of determining whether the new planned trajectory reported by the autonomous vehicle conflicts with planned trajectories of other vehicles until the right-of-way is successfully allocated to the autonomous vehicle.

Or after the server sends an instruction for re-determining a planned trajectory to an autonomous vehicle, the autonomous vehicle re-determines a new planned trajectory and sends the new planned trajectory to the server. Likewise, the server will re-perform the above step S101 of determining whether the new planned trajectory reported by the autonomous vehicle conflicts with planned trajectories of other vehicles until the right-of-way is successfully allocated to the autonomous vehicle.

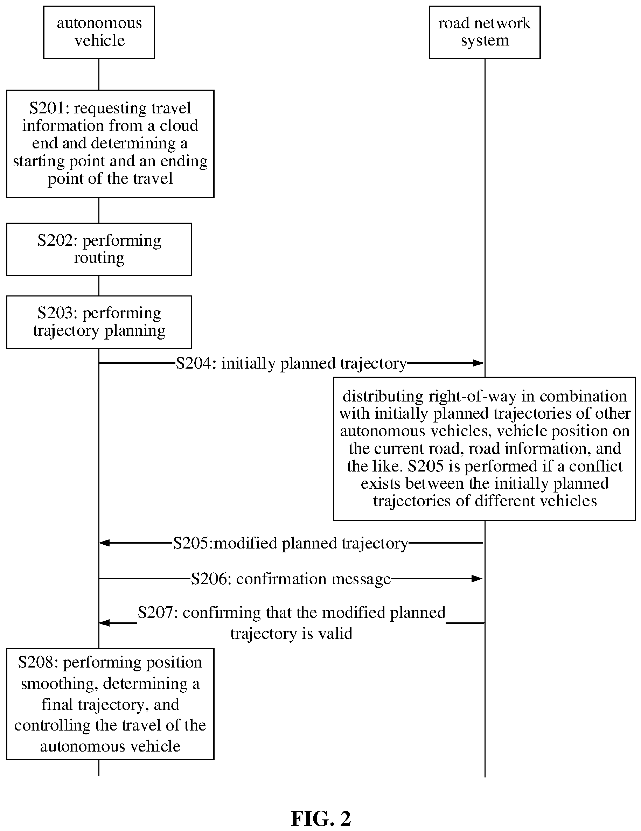

The embodiment of the present disclosure will now be described in detail with reference to Fig.2, by way of example of a routing process and a trajectory planning process of an autonomous vehicle. Fig. 2 is a flowchart of an implementation of a vehicle trajectory planning method according to an embodiment of the present disclosure. The flowchart includes examples of specific actions performed by an autonomous vehicle and a server device in an intelligent road network system, including steps as follows.

Step S201: an autonomous vehicle requests for travel information from a cloud and determines a starting point and an ending point of the travel.

Step S202: the autonomous vehicle performs a routing, such as acquiring all paths of lane level that are possible from the starting point to the ending point from a high-precision map.

Step S203: after all paths are determined, the autonomous vehicle activates a trajectory planning module to perform trajectory planning, namely, selecting a path to be followed by the current vehicle from all paths. The determination method may include: establishing a road network planar coordinate system, wherein the coordinate system takes the north-south direction as an X axis, takes the east-west direction as a Y axis and takes the position of the current vehicle as an origin; and planning a coordinate point where the central of the current vehicle should be located every 100ms in the future through sensing by the vehicle, wherein restrictions such as vehicle control, driving range, speed limit, and the like may be combined in planning. For example, the initially planned trajectory determined by the autonomous vehicle includes a coordinate point of a planned position of the current vehicle corresponding to one time point every 100ms in the next 10s.

Step S204: the current vehicle transmits the initially planned trajectory it prepares to follow to a road network system through a communication network, the road network system also receives initially planned trajectories of other vehicles on the same road, and calculates whether the initially planned trajectories of respective autonomous vehicles have an intersection and whether a competition for the right-of-way exists. In addition, the road network system can perform high-precision positioning on the position of a vehicle on the current road by using vehicle gravity sensing and Global Positioning System (GPS) and Inertial Measurement Unit (IMU). In addition, the road network system can also acquire and utilize inherent conditions such as existing lane lines, gradient, damages and the like, or temporary speed-limiting and road closure conditions due to weather and the like reasons, or category information of a vehicle (for example, the road network system can preferentially allocate the right-of-way to vehicles belonging to categories such as ambulances, fire fighting trucks and the like). In view of above, the road network system can serve as a center for centralized intelligent regulation and control of vehicle positions. In response to a confirmation message is returned to an autonomous vehicle if there is no conflict exists between the initially planned trajectories of different autonomous vehicles, the autonomous vehicle can drive according to the original initially planned trajectory; if there is a conflict, step S205 is performed.

Step S205: the road network system determines a modified planned trajectory for the autonomous vehicle and sends the modified planned trajectory to the autonomous vehicle, and step S206 is subsequently performed. The modified planned trajectory can include vehicle position information of a plurality of key time points. Alternatively, the road network system may also send an instruction for re-determining a planned trajectory to the autonomous vehicle. The autonomous vehicle re-determines a new planned trajectory according to the instruction.

Step S206: the autonomous vehicle determines whether to adopt the modified planned trajectory or not, and if so, a confirmation message is sent to the road network system, and step S207 is subsequently performed. If not, the autonomous vehicle re-determines a new planned trajectory and uploads the new planned trajectory again.

Step S207: the road network system confirms whether the modified planned trajectory sent to the autonomous vehicle is valid or not again, and if so, a confirmation is returned to the autonomous vehicle. This means that the right-of-way is allocated to the autonomous vehicle, and at the expected time points for the autonomous vehicle, no other vehicles will occupy its position. Therefore, the embodiment of the present disclosure can utilize the road network system to perform intelligent control on the right-of-way and improve the utilization rate of the road network. The embodiment of the present disclosure can also preferentially allocate the right-of-way for public service vehicles such as ambulances, fire fighting trucks, and the like according to the category information of a vehicle.

Step S208: the autonomous vehicle performs position smoothing according to the vehicle position information at the plurality of key time points included in the modified planned trajectory in step S205, and determines a final planned trajectory. A vehicle control module controls the driving of the autonomous vehicle according to the final planned trajectory.

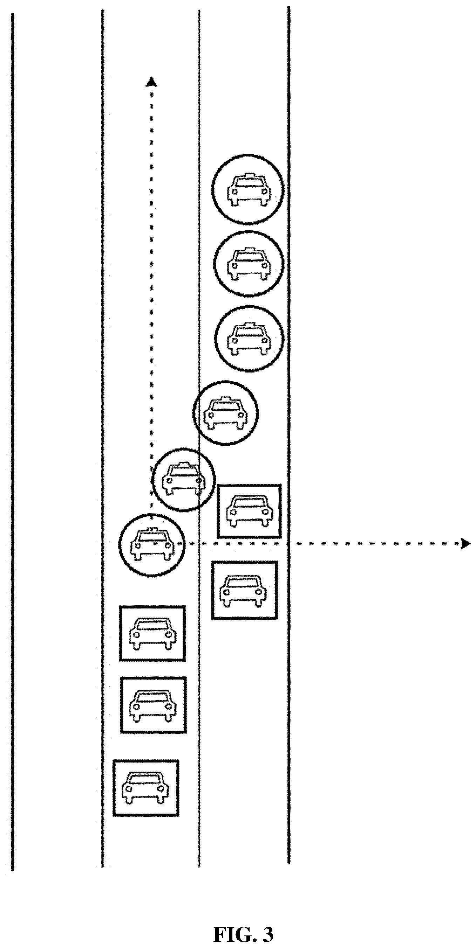

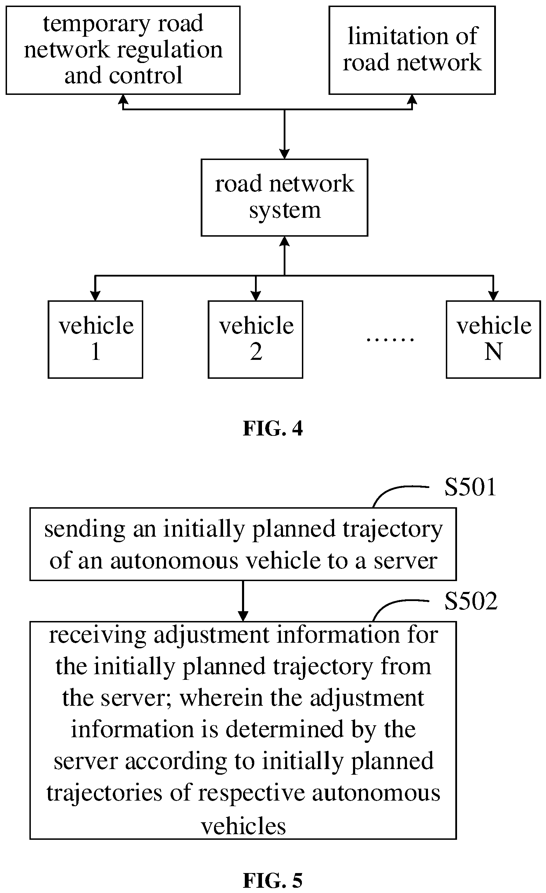

Fig. 3 is a schematic diagram of a vehicle planned trajectory according to an embodiment of the present disclosure. Fig. 3 shows the initially planned trajectories of two vehicles, in which circular patterns containing a vehicle pattern indicate the positions at respective time points in the initially planned trajectory of vehicle A, and square patterns containing a vehicle pattern indicate the positions at respective time points in the initially planned trajectory of vehicle B. By adopting the method proposed by the embodiment of the present disclosure, it is ensured that there is no conflict between the planned trajectories of vehicles on the road. Fig. 4 is a schematic diagram showing an information source of a road network system for a vehicle trajectory planning method according to an embodiment of the present disclosure. As shown in Fig. 4, in the process of implementing the allocation of the right-of-way, the road network system receives initial planned positions from each vehicle, and performs the allocation of the right-of-way according to information such as temporary road network regulation and control information, road limitation and the like.

The vehicle trajectory planning method proposed by the embodiment of the present disclosure introduced above can ensure that only one vehicle is present in each road area every moment, so that the distributed problem can be converted into a centralized problem, the distribution problem of right-of-way is thoroughly solved, the automatic driving is safer, and the utilization efficiency of the road network is higher.

An embodiment of the present disclosure also proposes another vehicle trajectory planning method, which can be applied to an autonomous vehicle. Fig. 5 is a flowchart illustrating a vehicle trajectory planning method according to an embodiment of the present disclosure, including:
step S501: sending an initially planned trajectory of an autonomous vehicle to a server; and
step S502: receiving adjustment information for the initially planned trajectory from the server; wherein the adjustment information is determined by the server according to initially planned trajectories of respective autonomous vehicles.

If the server determines that no conflict exists according to the received initially planned trajectories of the respective autonomous vehicles, a confirmation message is sent to the autonomous vehicle. According to the received confirmation message, the autonomous vehicle may drive according to its initially planned trajectory.

Optionally, the adjustment information in step S502 includes a modified planned trajectory;
wherein the modified planned trajectory is determined by the server according to at least one of the initially planned trajectories of the respective autonomous vehicles, positioning information of the respective autonomous vehicles, category information of the respective autonomous vehicles, and road information in a case that a conflict exists between the initially planned trajectories of the respective autonomous vehicles.

Or, alternatively, the adjustment information in step S502 includes an instruction for re-determining a planned trajectory;
wherein the instruction for re-determining a planned trajectory is sent by the server in the case that the conflict exists between the initially planned trajectories of the respective autonomous vehicles.

Optionally, after receiving the instruction for re-determining a planned trajectory, the method may further include:
determining a new planned trajectory; and
sending the new planned trajectory to the server.

According to the new planned trajectory, the server can determine whether it conflicts with the planned trajectories of other vehicles or not, until a planned trajectory without conflict is determined for the autonomous vehicle.

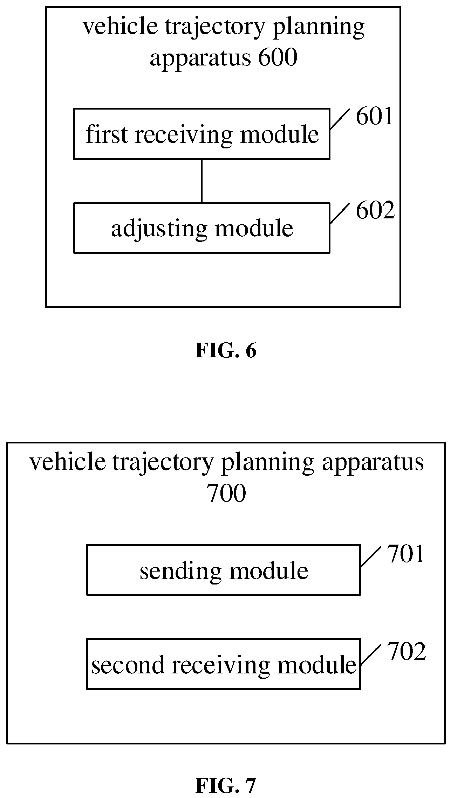

An embodiment of the present disclosure also proposes a vehicle trajectory planning apparatus, which may be a server device in an intelligent network. Fig. 6 is a schematic structural diagram of a vehicle trajectory planning apparatus 600 according to an embodiment of the present disclosure, including:
a first receiving module 601 configured for receiving initially planned trajectories of respective autonomous vehicles; and
an adjusting module 602 configured for adjusting, in a case that a conflict exists between the initially planned trajectories of the respective autonomous vehicles, a planned trajectory of an autonomous vehicle associated with the conflict.

In an implementation, the initially planned trajectory includes planned positions of the autonomous vehicle at a plurality of time points within a preset time period;
the case that the conflict exists between the initially planned trajectories of the respective autonomous vehicles includes: there being a time point at which the planned positions conflict in the plurality of time points within the preset time period.

In one implementation, the adjusting module 602 is configured for determining, in the case that the conflict exists between the initially planned trajectories of the respective autonomous vehicles, the modified planned trajectory for the autonomous vehicle associated with the conflict according to at least one of the initially planned trajectories of the respective autonomous vehicles, positioning information of the respective autonomous vehicles, category information of the respective autonomous vehicles, and road information.

An embodiment of the present disclosure also provides another vehicle trajectory planning apparatus, which may be arranged in an autonomous vehicle. Fig. 7 is a schematic structural diagram of a vehicle trajectory planning apparatus 700 according to an embodiment of the present disclosure, including:
a sending module 701 configured for sending an initially planned trajectory of an autonomous vehicle to a server; and
a second receiving module 702 configured for receiving adjustment information for the initially planned trajectory from the server; wherein the adjustment information is determined by the server according to initially planned trajectories of respective autonomous vehicles.

In one implementation, the adjustment information includes a modified planned trajectory;
wherein the modified planned trajectory is determined by the server according to at least one of the initially planned trajectories of the respective autonomous vehicles, positioning information of the respective autonomous vehicles, category information of the respective autonomous vehicles, and road information in a case that a conflict exists between the initially planned trajectories of the respective autonomous vehicles.

In one implementation, the adjustment information includes an instruction for re-determining a planned trajectory;
wherein the instruction for re-determining a planned trajectory is sent by the server in the case that the conflict exists between the initially planned trajectories of the respective autonomous vehicles.

In one implementation, the sending module 701 is further configured for determining a new planned trajectory and sending the new planned trajectory to a server.

The function of each module in each apparatus of the embodiment of the present disclosure can be referred to the corresponding description in the above-described method, and will not be described in detail herein.

According to an embodiment of the present disclosure, the present disclosure also provides two kinds of electronic devices, a readable storage medium, and a computer program product. In addition, the present disclosure also provides a server device of the intelligent road network, wherein the server includes one electronic device described above. The present disclosure also provides an autonomous vehicle that includes the other electronic device described above.

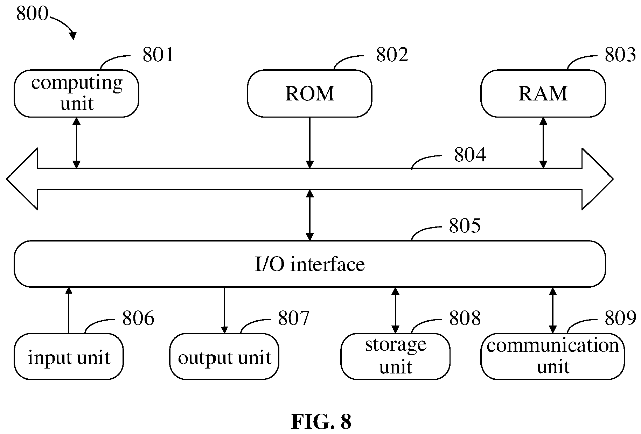

Fig. 8 illustrates a schematic block diagram of an exemplary electronic device 800 that may be used to implement an embodiment of the present disclosure. The electronic device is intended to represent various forms of digital computers, such as laptop computers, desktop computers, workstations, personal digital assistants, servers, blade servers, mainframe computers, and other suitable computers. The electronic device may also represent various forms of mobile devices, such as personal digital processors, cellular telephones, smart phones, wearable equipment, and other similar computing devices. The components, connections and relationships thereof, and functions thereof shown herein are by way of example only and are not intended to limit the implementations of the present disclosure described and/or claimed herein.

As shown in Fig. 8, the device 800 includes a computing unit 801 that may perform various suitable actions and processes in accordance with a computer program stored in a read only memory (ROM) 802 or a computer program loaded from a storage unit 808 into a random access memory (RAM) 803. In RAM 803, various programs and data required by the operation of the device 800 may also be stored. The computing unit 801, the ROM802, and the RAM803 are connected to each other via a bus 804. An input and output (I/O) interface 805 is also connected to the bus 804.

Multiple components in the device 800 are connected to the I/O interface 805, including: an input unit 806, such as a keyboard, a mouse, etc.; an output unit 807, such as various types of displays, speakers, etc.; a storage unit 808, such as a magnetic disk, an optical disk, etc.; and a communication unit 809, such as a network card, a modem, a wireless communication transceiver, etc. The communication unit 809 allows the device 800 to exchange information/data with other devices over a computer network, such as the Internet, and/or various telecommunication networks.

The computing unit 801 may be various general purpose and/or special purpose processing assemblies having processing and computing capabilities. Some examples of the computing unit 801 include, but are not limited to, a central processing unit (CPU), a graphic processing unit (GPU), various special purpose artificial intelligence (AI) computing chips, various computing units running a machine learning model algorithm, a digital signal processor (DSP), and any suitable processors, controllers, microcontrollers, etc. The computing unit 80 executes various methods and processes described above, such as a vehicle trajectory planning method. For example, in some embodiments, the vehicle trajectory planning method may be implemented as a computer software program tangibly included in a machine readable medium, such as a storage unit 808. In some embodiments, part or all of the computer program may be loaded and/or installed on the device 800 via the ROM 802 and/or the communication unit 809. When a computer program is loaded into the RAM803 and executed by the computing unit 801, one or more steps of the vehicle trajectory planning method described above may be performed. Alternatively, in other embodiments, the computing unit 801 may be configured to perform the vehicle trajectory planning method by any other suitable modes (e.g., via a firmware).

Various implementations of the system and technology described above herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), computer hardware, firmware, software, and/or a combination thereof. These various implementations may include: implementing in one or more computer programs, which can be executed and/or interpreted on a programmable system including at least one programmable processor. The programmable processor can be a dedicated or general-purpose programmable processor, which can receive data and instructions from, and transmit the data and instructions to, a memory system, at least one input device, and at least one output device.

Program code for implementing the method of the present disclosure may be edited in any combination of one or more programming languages. These program codes may be provided to a processor or controller of a general purpose computer, special purpose computer, or other programmable data processing device such that the program codes, when executed by the processor or controller, cause the functions/operations stipulated in the flow diagram and/or block diagram to be implemented. The program code may be executed entirely on a machine, partly on a machine, or as an independent software package partly on a machine and partly on a remote machine or entirely on a remote machine or server.

In the context of the present disclosure, a machine-readable medium can be a tangible medium that can include or store a program for use by or in connection with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of a machine-readable storage medium may include an electrical connection based on one or more wires, a portable computer disk, a hard disk, a random access memory (RAM), a read-only memory (ROM), an erasable programmable read-only memory (EPROM or Flash Memory), an optical fiber, a portable compact disk read-only memory (CD-ROM), optical storage device, a magnetic storage device, or any suitable combination thereof.

To provide the interaction with a user, the system and technology described herein may be applied on a computer having: a display device (e.g., a CRT (cathode ray tube) or LCD (liquid crystal display) monitor) for displaying information to the user; and a keyboard and a pointing device (e.g., a mouse or a trackball) through which the user can provide input to the computer. Other types of devices may also be used to provide the interaction with a user: for example, the feedback provided to the user may be any form of sensory feedback (e.g., visual feedback, auditory feedback, or tactile feedback); and input from the user may be received in any form (including acoustic input, voice input, or tactile input).

The system and technology described herein may be applied in a computing system that includes a background component (e.g., as a data server), or a computing system that includes a middleware component (e.g., an application server), or a computing system that includes a front-end component (e.g., a user computer having a graphical user interface or a web browser, wherein a user may interact with implementations of the system and technology described herein through the graphical user interface or the web browser), or a computing system that includes any combination of such background component, middleware component, or front-end component. The components of the system may be interconnected by any form or medium of digital data communication (e.g., a communication network). Examples of the communication network include: Local Area Networks (LAN), Wide Area Network (WAN), and the Internet.

A computer system may include a client and a server. The client and server are typically remote from each other and typically interact through a communication network. The relationship of the client and the server is generated by computer programs running on the respective computers and having a client-server relationship with each other.

It should be understood that the steps in the various processes described above may be reordered or omitted, or other steps may be added therein. For example, the steps described in the present disclosure may be performed in parallel or sequentially or may be performed in a different order, so long as the desired result of the technical solutions disclosed in the present disclosure can be achieved, and no limitation is made herein.

Above specific embodiments do not constitute a limitation on the protection scope of the present disclosure. It should be understood by those skilled in the art that various modifications, combinations, sub-combinations, and substitutions may be available according to design requirements and other factors. Any modifications, equivalent replacements and improvements made within the spirit and principle of the present disclosure shall be covered within the protection scope of the present disclosure.

## Claims

1. A vehicle trajectory planning method, comprising:
receiving (S101) initially planned trajectories of respective autonomous vehicles; and
adjusting (S102), in a case that a conflict exists between the initially planned trajectories of the respective autonomous vehicles, a planned trajectory of an autonomous vehicle associated with the conflict.

2. The vehicle trajectory planning method of claim 1, wherein the initially planned trajectory comprises planned positions of the autonomous vehicle at a plurality of time points within a preset time period;
the case that the conflict exists between the initially planned trajectories of the respective autonomous vehicles comprises: there being a time point at which the planned positions conflict in the plurality of time points within the preset time period.

3. The vehicle trajectory planning method of claim 1 or 2, wherein adjusting (S 102) the planned trajectory of the autonomous vehicle associated with the conflict comprises:
determining a modified planned trajectory for the autonomous vehicle associated with the conflict, and sending the modified planned trajectory to the autonomous vehicle associated with the conflict; and/or,
sending an instruction for re-determining a planned trajectory to the autonomous vehicle associated with the conflict.

4. The vehicle trajectory planning method of claim 3, wherein determining the modified planned trajectory for the autonomous vehicle associated with the conflict comprises:
determining the modified planned trajectory for the autonomous vehicle associated with the conflict according to at least one of the initially planned trajectories of the respective autonomous vehicles, positioning information of the respective autonomous vehicles, category information of the respective autonomous vehicles, and road information.

5. A vehicle trajectory planning method, comprising:
sending (S501) an initially planned trajectory of an autonomous vehicle to a server; and
receiving (S502) adjustment information for the initially planned trajectory from the server; wherein the adjustment information is determined by the server according to initially planned trajectories of respective autonomous vehicles.

6. The vehicle trajectory planning method of claim 5, wherein the adjustment information comprises a modified planned trajectory;
wherein the modified planned trajectory is determined by the server according to at least one of the initially planned trajectories of the respective autonomous vehicles, positioning information of the respective autonomous vehicles, category information of the respective autonomous vehicles, and road information in a case that a conflict exists between the initially planned trajectories of the respective autonomous vehicles.

7. The vehicle trajectory planning method of claim 5 or 6, wherein the adjustment information comprises an instruction for re-determining a planned trajectory;
wherein the instruction for re-determining a planned trajectory is sent by the server in the case that the conflict exists between the initially planned trajectories of the respective autonomous vehicles.

8. The vehicle trajectory planning method of any of claims 5-7, further comprising:
determining a new planned trajectory; and
sending the new planned trajectory to the server.

9. A vehicle trajectory planning apparatus, comprising:
a first receiving module (601) configured for receiving initially planned trajectories of respective autonomous vehicles; and
an adjusting module (602) configured for adjusting, in a case that a conflict exists between the initially planned trajectories of the respective autonomous vehicles, a planned trajectory of an autonomous vehicle associated with the conflict.

10. The vehicle trajectory planning apparatus of claim 9, wherein the initially planned trajectory comprises planned positions of the autonomous vehicle at a plurality of time points within a preset time period;
the case that the conflict exists between the initially planned trajectories of the respective autonomous vehicles comprises: there being a time point at which the planned positions conflict in the plurality of time points within the preset time period.

11. The vehicle trajectory planning apparatus of claim 9 or 10, wherein the adjusting module (602) is configured for:
determining, in the case that the conflict exists between the initially planned trajectories of the respective autonomous vehicles, a modified planned trajectory for the autonomous vehicle associated with the conflict, and sending the modified planned trajectory to the autonomous vehicle associated with the conflict; and/or,
sending an instruction for re-determining a planned trajectory to the autonomous vehicle associated with the conflict;
optionally, the adjusting module (602) is configured for:
determining, in the case that the conflict exists between the initially planned trajectories of the respective autonomous vehicles, the modified planned trajectory for the autonomous vehicle associated with the conflict according to at least one of the initially planned trajectories of the respective autonomous vehicles, positioning information of the respective autonomous vehicles, category information of the respective autonomous vehicles, and road information.

12. A vehicle trajectory planning apparatus, comprising:
a sending module (701) configured for sending an initially planned trajectory of an autonomous vehicle to a server; and
a second receiving module (702) configured for receiving adjustment information for the initially planned trajectory from the server; wherein the adjustment information is determined by the server according to initially planned trajectories of respective autonomous vehicles.

13. The vehicle trajectory planning apparatus of claim 12, wherein the adjustment information comprises a modified planned trajectory;
wherein the modified planned trajectory is determined by the server according to at least one of the initially planned trajectories of the respective autonomous vehicles, positioning information of the respective autonomous vehicles, category information of the respective autonomous vehicles, and road information in a case that a conflict exists between the initially planned trajectories of the respective autonomous vehicles.

14. The vehicle trajectory planning apparatus of claim 12 or 13, wherein the adjustment information comprises an instruction for re-determining a planned trajectory; wherein the instruction for re-determining a planned trajectory is sent by the server in the case that the conflict exists between the initially planned trajectories of the respective autonomous vehicles.

15. The vehicle trajectory planning apparatus of any of claims 12-14, wherein the sending module (701) is further configured for:
determining a new planned trajectory and sending the new planned trajectory to the server.
